(19) Europäisches Patentamt
European Patent Office
Office européen des brevets

(11) EP 3 643 729 B1

(12) # EUROPEAN PATENT SPECIFICATION

(45) Date of publication and mention of the grant of the patent:
**23.11.2022 Bulletin 2022/47**

(21) Application number: **18821413.4**

(22) Date of filing: **21.06.2018**

(51) International Patent Classification (IPC):
***C08F 220/34*** (2006.01) ***C08F 2/22*** (2006.01)
***C08F 2/44*** (2006.01) ***C09J 133/14*** (2006.01)
***C09J 157/12*** (2006.01) ***C09J 131/04*** (2006.01)
***C08F 212/08*** (2006.01) ***C08F 218/08*** (2006.01)
***C09D 133/14*** (2006.01)

(52) Cooperative Patent Classification (CPC):
(C-Sets available)
**C08F 2/30; C08F 218/08; C08F 220/36;
C09D 133/14; C09J 131/04; C09J 133/14** (Cont.)

(86) International application number:
**PCT/JP2018/023698**

(87) International publication number:
**WO 2018/235924 (27.12.2018 Gazette 2018/52)**

(54) **AQUEOUS EMULSION AND ADHESIVE USING SAME**

WÄSSRIGE EMULSION UND KLEBSTOFF DAMIT

ÉMULSION AQUEUSE ET ADHÉSIF L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2017 JP 2017121902**

(43) Date of publication of application:
**29.04.2020 Bulletin 2020/18**

(73) Proprietor: **Kuraray Co., Ltd.**
**Okayama 710-0801 (JP)**

(72) Inventors:
- **IMAOKA, Yoriko**
**Kurashiki-shi**
**Okayama 713-8550 (JP)**
- **MORIKAWA, Keisuke**
**Kurashiki-shi**
**Okayama 713-8550 (JP)**
- **TANIDA, Tatsuya**
**Kurashiki-shi**
**Okayama 713-8550 (JP)**

(74) Representative: **Müller-Boré & Partner**
**Patentanwälte PartG mbB**
**Friedenheimer Brücke 21**
**80639 München (DE)**

(56) References cited:
**WO-A1-2015/176854** **JP-A- 2000 204 106**
**JP-A- 2000 204 106** **JP-A- 2001 123 138**
**JP-A- 2002 012 843** **JP-A- 2002 012 843**
**JP-A- 2003 523 476** **JP-A- 2006 274 266**
**US-A1- 2003 065 089** **US-A1- 2012 301 686**
**US-A1- 2016 186 000**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 218/08, C08F 216/1458, C08F 220/06;**
**C08F 218/08, C08F 220/06, C08F 220/34;**
**C08F 218/08, C08F 220/06, C08F 220/36;**
**C08F 218/08, C08F 220/06, C08F 220/603;**
**C08F 218/08, C08F 220/36, C08F 220/06;**
**C08F 218/08, C08F 220/36, C08F 220/56;**
**C08F 218/08, C08F 220/603, C08F 220/06;**
**C09J 131/04, C08L 29/04;**
**C09J 133/14, C08L 29/04**

## Description

### TECHNICAL FIELD

The present invention relates to an aqueous emulsion that excels in heat resistance, water resistance (particularly, hot water resistance and boiling resistance), and viscosity stability, and to an adhesive containing the aqueous emulsion. The present invention particularly relates to an adhesive that forms an adhesive layer resistant to staining while showing desirable adhesiveness for various types of wood materials.

### BACKGROUND ART

Vinyl ester aqueous emulsions obtained by polymerizing a vinyl ester monomer such as vinyl acetate with the use of a vinyl alcohol polymer (which may hereinafter be abbreviated as "PVA") as a protective colloid have been used in a wide variety of fields, including, for example, adhesives for paper, woodworking, and plastics, binders for impregnated paper and nonwoven products, admixtures, concrete bonding adhesives, paints, and paper processing and fiber processing. In adhesive applications, it is common practice to use a PVA as a protective colloid in combination with a carboxy group-containing unsaturated monomer, particularly when water resistance or adhesiveness is required.

However, an adhesive using an aqueous emulsion prepared in this fashion is insufficient in terms of heat resistance, hot water resistance, and boiling resistance, although improvements are made in water resistance.

Several solutions have been proposed to this issue. For example, Patent Literature 1 proposes an emulsion adhesive containing a polyaldehyde capable of releasing aldehyde groups in an acid medium. This approach, however, cannot achieve sufficient viscosity stability, and extended use is difficult to achieve, though the emulsion adhesive can yield desirable water resistance. The adhesive also involves use of a strong acid, aluminum metal as a catalyst for cross-linking reaction. This is problematic because the catalyst accelerates deterioration of the strength of an adhesive layer and an adherend such as wood, and causes staining of the adhesive layer.

Patent Literature 2 proposes an emulsion prepared by copolymerization of a vinyl acetate monomer and N-methylolacrylamide. However, because acidic conditions are employed to promote a cross-linking reaction of a structure derived from the N-methylolacrylamide monomer, this approach causes deterioration of the strength of an adhesive layer and an adherend, and staining of the adhesive layer, as with the case of the foregoing related art. Another issue is insufficient water resistance at low temperatures, and environmentally problematic generation of formaldehyde occurring when the emulsion is used as an adhesive.

Patent Literature 3 and Patent Literature 4 propose emulsion polymerization of vinyl acetate, or emulsion copolymerization of vinyl acetate and a (meth)acrylic acid ester, with the aid of an ethylene-incorporated, modified PVA used as a protective colloid (this PVA may be simply referred to as "ethylene-modified PVA" hereinafter). With this approach, some degree of improvement in heat resistance and hot water resistance can be achieved; however, the improvement in heat resistance and hot water resistance is still insufficient, and the end results are not satisfactory with regard to bond strength and boiling resistance.

There have been disclosed an aqueous coating composition (Patent Literature 5) and a pavement marking paint (Patent Literature 6) which are composed of an aqueous emulsion of a vinyl copolymer obtained by emulsion polymerization of an ureido group-containing monomer component such as methacrylamido-ethyl-ethylene urea with another copolymerizable vinyl monomer. However, the performance of these products as adhesives is unknown. A water-proof wood surface treatment agent (Patent Literature 7) and a flooring adhesive formulation (Patent Literature 8) composed of an aqueous emulsion similar to that described above have been disclosed. However, there is no mention of the heat resistance, hot water resistance, and boiling resistance of these products, and the levels of such properties are left unknown.

### CITATION LIST

#### Patent Literature

Patent Literature 1: JP 08-060116 A
Patent Literature 2: JP 10-121017 A
Patent Literature 3: JP 11-106727 A
Patent Literature 4: JP 2001-123138 A
Patent Literature 5: JP 09-255894 A
Patent Literature 6: JP 2004-263000 A

Patent Literature 7: JP 2009-506186 T
Patent Literature 8: JP 2003-523476 T
Other relevant documents are US-A-2016/186000, US-A-2003/0065089, JP-A-2000/204106 and JP-A-2002/12843.

## SUMMARY OF INVENTION

### Technical Problem

The present invention has been made in view of the circumstances described above, and an object of the present invention is to provide an aqueous emulsion that excels in heat resistance, water resistance (particularly hot water resistance and boiling resistance), and viscosity stability. It is also an object of the present invention to provide an adhesive containing the aqueous emulsion and that forms an adhesive layer resistant to staining while showing desirable adhesiveness for various types of wood materials.

### Solution to Problem

As a result of intensive studies, the present inventors have found that the foregoing issues can be solved by an aqueous emulsion according to claim 1 comprising an ethylenically unsaturated monomer unit-containing polymer (A) having specific structural units and contained as a dispersoid, and a vinyl alcohol polymer (B) contained as a dispersant, and by an adhesive containing the aqueous emulsion. Based on this finding, the inventors have completed the present invention.
That is, the present disclosure relates to the following

[1] An aqueous emulsion comprising an ethylenically unsaturated monomer unit-containing polymer (A) as a dispersoid and a vinyl alcohol polymer (B) as a dispersant, wherein the ethylenically unsaturated monomer unit-containing polymer (A) comprises:

a structural unit derived from a radical-polymerizable ethylenically unsaturated monomer (p) having a functional group represented by the following general formula (P); and

a structural unit derived from a radical-polymerizable ethylenically unsaturated monomer (q) having a functional group represented by the following general formula (Q),

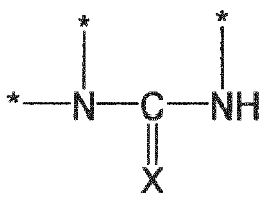

(P)

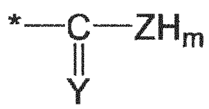

(Q)

wherein X and Y are the same or different, and each represent an oxygen atom or a sulfur atom, Z is an oxygen atom or a nitrogen atom, * represents a bond, and m is 1 or 2,

wherein the structural unit derived from the ethylenically unsaturated monomer (p) has a content of 0.2 to 10.0 mass% with respect to the polymer (A), and the structural unit derived from the ethylenically unsaturated monomer (q) has a content of 0.002 to 6.0 mass% with respect to the polymer (A),

wherein the polymer (A) comprises a ternary copolymer of the ethylenically unsaturated monomer (p), the ethylenically unsaturated monomer (q), and an ethylenically unsaturated monomer (r), and the ethylenically unsaturated monomer (r) is copolymerizable with the ethylenically unsaturated monomer (p) and the ethylenically unsaturated monomer (q),

wherein the ethylenically unsaturated monomer (r) is at least one selected from the group consisting of a vinyl ester monomer and a styrene monomer.

wherein the ethylenically unsaturated monomer (p) is N-(2-methacryloyloxyethyl)ethylene urea, or N-(2-methacrylamidoethyl)ethylene urea

wherein the ethylenically unsaturated monomer (q) is at least one selected from the group consisting of (meth)acrylic acid and acrylamide,

[2] A method for producing the aqueous emulsion of [1], wherein a monomer comprising the ethylenically unsaturated monomer (p) and the ethylenically unsaturated monomer (q) is subjected to emulsion polymerization in the presence of the vinyl alcohol polymer (B).
[3] An adhesive comprising the aqueous emulsion of [1].

Advantageous Effects of Invention

An aqueous emulsion of the present invention excels in heat resistance, water resistance (particularly hot water resistance and boiling resistance), and viscosity stability. An adhesive containing the aqueous emulsion forms an adhesive layer resistant to staining, and shows desirable adhesiveness for various types of wood materials. The emulsion does not produce volatile low molecules such as formaldehyde, and can provide an adhesive having a high level of safety.

DESCRIPTION OF EMBODIMENTS

Hereinafter, the present invention is described in detail.

Aqueous Emulsion

An aqueous emulsion of the present invention comprises a specific ethylenically unsaturated monomer-containing polymer (A) as a dispersoid (hereinafter, also referred to simply as "polymer (A)"; details are as follows), and a vinyl alcohol polymer (B) as a dispersant. The aqueous emulsion may contain dispersoids other than the polymer (A), and dispersants other than the vinyl alcohol polymer (B). The aqueous emulsion may also contain additives, provided that the effects of the present invention are not impaired.
As used herein, "(meth)acryl" refers to "acryl" and "methacryl".

Polymer (A)

The polymer (A) is a dispersoid of the aqueous emulsion of the present invention, and comprises a structural unit derived from a radical-polymerizable ethylenically unsaturated monomer (p) having a functional group represented by the following general formula (P), and a structural unit derived from a radical-polymerizable ethylenically unsaturated monomer (q) having a functional group represented by the following general formula (Q),

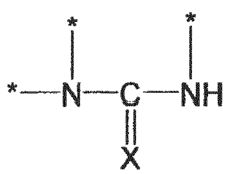

(P)

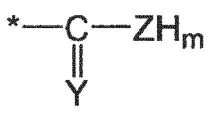

(Q)

wherein X and Y are the same or different, and each represent an oxygen atom or a sulfur atom, Z is an oxygen atom or a nitrogen atom, * represents a bond, and m is 1 or 2, depending on the number of bonds on Z.
The content of the structural unit derived from the ethylenically unsaturated monomer (p) is 0.1 to 10.0 mass%, more preferably 0.3 to 8.0 mass%, even more preferably 0.4 to 5.0 mass% with respect to the total amount of the constituent ethylenically unsaturated monomer units of the polymer (A). When the content of the structural unit derived

from the ethylenically unsaturated monomer (p) is less than 0.1 mass%, the aqueous emulsion tends to suffer from insufficient heat resistance, water resistance, hot water resistance, and boiling resistance. When the content of the structural unit derived from the ethylenically unsaturated monomer (p) is more than 10 mass%, the emulsion tends to aggregate, and have difficulty undergoing polymerization.

The content of the structural unit derived from the ethylenically unsaturated monomer (q) is 0.002 to 6.0 mass%, more preferably 0.01 to 6.0 mass%, even more preferably 0.05 to 4.0 mass% with respect to the total amount of the constituent ethylenically unsaturated monomer units of the polymer (A). When the content of the structural unit derived from the ethylenically unsaturated monomer (q) is less than 0.002 mass%, the viscosity stability of the emulsion tends to decrease. When the content of the structural unit derived from the ethylenically unsaturated monomer (q) is more than 6.0 mass%, the emulsion tends to have difficulty undergoing polymerization.

The mass ratio (p)/(q) of the ethylenically unsaturated monomer (p) to the ethylenically unsaturated monomer (q) is preferably 99/1 to 45/55, more preferably 98/2 to 50/50. With a mass ratio of more than 99/1, the emulsion tends to suffer from insufficient viscosity stability. With a mass ratio of less than 45/55, the emulsion tends to suffer from insufficient heat resistance, water resistance, hot water resistance, and boiling resistance.

The polymer (A) comprises a ternary copolymer of the ethylenically unsaturated monomer (p), the ethylenically unsaturated monomer (q), and an ethylenically unsaturated monomer (r), and the ethylenically unsaturated monomer (r) is copolymerizable with the ethylenically unsaturated monomer (p) and the ethylenically unsaturated monomer (q).

The aqueous emulsion of the present invention may further comprise an ethylenically unsaturated monomer unit (q)-containing polymer (C), in addition to the dispersoid polymer (A) and the dispersant vinyl alcohol polymer (B). The polymer (C) is preferably a homopolymer of the ethylenically unsaturated monomer (q), or a copolymer of the ethylenically unsaturated monomer (q) and an ethylenically unsaturated monomer (s) copolymerizable with the ethylenically unsaturated monomer (q). The polymer (C) does not contain the ethylenically unsaturated monomer (p).

Unsaturated monomer (r) are selected from the group consisting of vinyl ester monomers and styrene monomers. Examples of the ethylenically unsaturated monomer (s) include vinyl ester monomers, diene monomers, olefinic monomers, nitrile monomers, aromatic vinyl monomers (for example, such as styrene monomers), heterocyclic vinyl monomers, vinyl ether monomers, allyl monomers, and polyfunctional acrylate monomers. These may be used alone, or two or more thereof may be used in combination. Among these, at least one unsaturated monomer selected from the group consisting of vinyl ester monomers and styrene monomers is preferred, and vinyl ester monomers are more preferred.

Examples of the vinyl ester monomers include vinyl formate, vinyl acetate, vinyl propionate, vinyl butyrate, vinyl isobutyrate, vinyl pivalate, vinyl versatate, vinyl cinnamate, vinyl crotonate, vinyl decanoate, vinyl hexanoate, vinyl octanoate, vinyl isononanoate, vinyl trimethylacetate, vinyl 4-tert-butylbenzoate, vinyl 2-ethylhexanoate, vinyl caproate, vinyl caprylate, vinyl laurate, vinyl palmitate, vinyl stearate, vinyl oleate, and vinyl benzoate. Vinyl acetate is particularly preferred from an industrial point of view. Examples of the styrene monomers include styrene, o-methylstyrene, p-methylstyrene, p-tert-butylstyrene, 1,3-dimethylstyrene, $\alpha$-methylstyrene, vinylnaphthalene, and vinylanthracene. Examples of the diene monomers include conjugated diene monomers such as 1,3-butadiene and 2-methyl-1,3-butadiene.

The ethylenically unsaturated monomer (p) is preferably at least one ethylenically unsaturated monomer selected from the group consisting of a compound represented by the following general formula (I), a compound represented by the following general formula (II), and a compound represented by the following general formula (III)

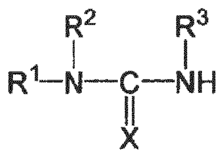
(I)

wherein:

X is an oxygen atom or a sulfur atom,
$R^1$ represents a group selected from the group consisting of a 2-(2-carboxyacrylamido)ethyl group, a vinyl group, an allyl group, an isopropenyl group, an acryloyl group, a methacryloyl group, a 2-hydroxy-3-(allyloxy)propyl group, and a functional group represented by the following general formula (IV)

$R^4$-$A^1$-Alk- (IV)

wherein $R^4$ represents a 2-hydroxy-3-(allyloxy)propyl group, a vinyl group, a methacryloyl group, an acryloyl group, or a methacryloyloxyaceto group, $A^1$ represents -O- or -$NR^5$-, in which $R^5$ represents a hydrogen atom or a $C_1$ to $C_8$ alkyl group, and Alk represents a $C_2$ to $C_8$ alkylene chain, and

$R^2$ and $R^3$ are the same or different, and each represent a hydrogen atom or a $C_1$ to $C_8$ alkyl group;

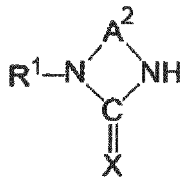

(II)

wherein X and $R^1$ are as defined above, $A^2$ represents an alkylene chain having 2 or 3 carbon atoms, and the alkylene chain may have a substituent and may have a carbonyl group between the carbon atoms; and

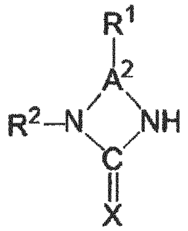

(III)

wherein X, $A^2$, $R^1$, and $R^2$ are as defined above.

In the above general formulae (I), (II), and (III), X is preferably an oxygen atom. In the above general formulae (I), (II), and (III), $R^1$ is preferably a 2-(2-carboxyacrylamido)ethyl group, an acryloyl group, a methacryloyl group, a 2-hydroxy-3-(allyloxy)propyl group, or a functional group represented by the general formula (IV), more preferably an acryloyl group, a methacryloyl group, a 2-hydroxy-3-(allyloxy)propyl group, or a functional group represented by the general formula (IV), even more preferably a functional group represented by the general formula (IV).

In the above general formulae (I), (II), and (III), $R^2$ and $R^3$ are the same or different, and each represent preferably a hydrogen atom or $C_1$ to $C_6$ alkyl group, more preferably a hydrogen atom or $C_1$ to $C_4$ alkyl group.

The $C_1$ to $C_8$ alkyl group represented by $R^2$ and $R^3$ may be linear or branched. Examples of the $C_1$ to $C_8$ alkyl group represented by $R^2$ and $R^3$ include methyl, ethyl, n-propyl, isopropyl, n-butyl, isobutyl, sec-butyl, 2-methylpropyl, tert-butyl, n-pentyl, isopentyl, sec-pentyl, neopentyl, 1-ethylpropyl, 1,1-dimethylpropyl, 1,2-dimethylpropyl, n-hexyl, 1-methylpentyl, 2-methylpentyl, 3-methylpentyl, 4-methylpentyl (isohexyl), 1-ethylbutyl, 2-ethylbutyl, 1,1-dimethylbutyl, 1,2-dimethylbutyl, 1,3-dimethylbutyl, 1,4-dimethylbutyl, 2,2-dimethylbutyl, 2,3-dimethylbutyl, 3,3-dimethylbutyl, 1-ethyl-2-methyl-propyl, 1,1,2-trimethylpropyl, n-heptyl, 2-methylhexyl, n-octyl, isooctyl, tert-octyl, 2-ethylhexyl, and 3-methylheptyl.

In the above general formulae (II) and (III), the alkylene chain having 2 or 3 carbon atoms represented by $A^2$ may have a substituent and may have a carbonyl group between the carbon atoms. That is, the alkylene chain having 2 or 3 carbon atoms represented by $A^2$ may be an alkylene chain having a substituent, an alkylene chain having a carbonyl group between the carbon atoms, or an alkylene chain having a substituent and having a carbonyl group between the carbon atoms. Examples of the substituent include groups selected from the group consisting of the same $C_1$ to $C_4$ alkyl groups exemplified for $R^2$ and $R^3$; $C_1$ to $C_4$ alkoxy groups such as a methoxy group, an ethoxy group, an n-propoxy group, an isopropoxy group, an n-butoxy group, a sec-butoxy group, and a tert-butoxy group; and a hydroxyl group. In the above general formulae (II) and (III), $A^2$ is preferably an alkylene chain having 2 carbon atoms, more preferably an unsubstituted alkylene chain having 2 carbon atoms. With regard to the alkylene chain represented by $A^2$ in the general formula (III), the alkylene chain being unsubstituted means that all the groups bonded to the carbon atoms are hydrogen atoms, except for $R^1$.

Examples of the $C_1$ to $C_8$ alkyl group represented by $R^5$ include those exemplified above for the $C_1$ to $C_8$ alkyl group represented by $R^2$ and $R^3$. Examples of the $C_2$ to $C_8$ alkylene chain represented by Alk of the general formula (IV) include ethylene, n-propylene, isopropylene, n-butylene, isobutylene, n-pentylene, 1-methyl-n-butylene, 2-methyl-n-butylene, 3-methyl-n-butylene, 1,1-dimethyl-n-propylene, 1,2-dimethyl-n-propylene, 2,2-dimethyl-n-propylene, 1-ethyl-n-propylene, n-hexylene, 1-methyl-n-pentylene, 2-methyl-n-pentylene, 3-methyl-n-pentylene, 4-methyl-n-pentylene, 1,1-dimethyl-n-butylene, 1,2-dimethyl-n-butylene, 1,3-dimethyl-n-butylene, 2,2-dimethyl-n-butylene, 2,3-dimethyl-n-butylene, 3,3-dimethyl-n-butylene, 1-ethyl-n-butylene, 2-ethyl-n-butylene, 1,1,2-trimethyl-n-propylene, n-heptylene, and n-octylene. Preferred as the $C_2$ to $C_8$ alkylene chain represented by Alk is a $C_2$ to $C_6$ alkylene chain, more preferably a $C_2$ to $C_4$ alkylene chain, even more preferably a $C_2$ to $C_3$ alkylene chain. These alkylene chains may have the same

substitutes exemplified above for $A^2$, and may have a carbonyl group between the carbon atoms.

The compound represented by the general formula (II) is preferably a compound in which $R^1$ represents a functional group represented by the general formula (IV), X is an oxygen atom, $A^2$ is an alkylene chain having 2 carbon atoms, $R^4$ is a 2-hydroxy-3-(allyloxy)propyl group, a vinyl group, a methacryloyl group, an acryloyl group, or a methacryloyloxyaceto group, $A^1$ is -O- or $-NR^5-$, in which $R^5$ is a hydrogen atom or $C_1$ to $C_8$ alkyl group, and Alk is a $C_2$ to $C_6$ alkylene chain. The compound represented by the general formula (II) is more preferably a compound in which Alk is a $C_2$ to $C_4$ alkylene chain, even more preferably a compound in which $A^2$ is an unsubstituted alkylene chain having two carbon atoms. Monomers (p) are, N-(2-methacryloyloxyethyl)ethylene urea and N-(2-methacrylamidoethyl)ethylene urea.

The ethylenically unsaturated monomer (q) is preferably a compound represented by the following general formula (V)

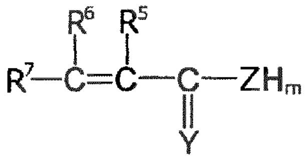

(V)

wherein Y is an oxygen atom or a sulfur atom, Z is an oxygen atom or a nitrogen atom, m is 1 or 2, and $R^5$ to $R^7$ are the same or different, and each represent a hydrogen atom or a $C_1$ to $C_8$ alkyl group.

Examples of the ethylenically unsaturated monomer (q) include acrylic acid, methacrylic acid, crotonic acid, 3-methylcrotonic acid, 2-methylisocrotonic acid, 2-methylcrotonic acid, 2-methyl-2-pentenoic acid, 4-methyl-2-pentenoic acid, trans-2-pentenoic acid, trans-2-methyl-2-pentenoic acid, trans-2-hexenoic acid, 2-heptenoic acid, 3-heptenoic acid, trans-2-octenoic acid, 2-nonenoic acid, trans-2-decenoic acid, acrylamide, methacrylamide, and crotonamide. Particularly preferred is (meth)acrylic acid.

Vinyl Alcohol Polymer (B)

The vinyl alcohol polymer (B) (a vinyl alcohol polymer may hereinafter be abbreviated as "PVA") used as a dispersant in the present invention has a degree of saponification of preferably 80 mol% or more, more preferably 83 mol% or more, even more preferably 85 mol% or more. When the degree of saponification is less than 80 mol%, the effect of the vinyl alcohol polymer (B) as a protective colloid tends to be so small that a stable aqueous emulsion may not be obtained. The upper limit of the degree of saponification is not particularly limited, and is preferably 99.9 mol% or less, more preferably 99.5 mol% or less. When the degree of saponification is more than 99.9 mol%, the resultant aqueous emulsion tends to have poor viscosity stability. PVAs having different degrees of saponification of 80 mol% or more may be used in combination. The degree of saponification is determined by a method specified in JIS K 6726 (1994). The PVA(B) may be an unmodified PVA or a modified PVA. Examples of the modified PVA include: anion-modified PVAs such as sulfonic acid group-modified PVAs and carboxylic acid group-modified PVAs; cation-modified PVAs such as quaternary amine group-modified PVAs; amide-modified PVAs; acetoacetyl group-modified PVAs; diacetone acrylamide-modified PVAs; and ethylene-modified PVAs. These may be used alone, or two or more thereof may be used in combination. Among these, ethylene-modified PVAs are preferred in terms of the water resistance of the resultant aqueous emulsion. The content of the modified group is preferably 0.5 to 10 mol%. The dispersant may consist essentially of the PVA (B). In the present specification, "consisting essentially of a certain component" means that the total content of components other than the certain component is less than 10 mass%, preferably less than 5.0 mass%, more preferably less than 1.0 mass%, even more preferably less than 0.5 mass%.

The viscosity-average degree of polymerization (which hereinafter may be simply referred to as "degree of polymerization") of the PVA (B) may be in a range generally employed by dispersants for emulsion polymerization. The lower limit of the degree of polymerization is preferably 300 or more, more preferably 350 or more, even more preferably 400 or more. A degree of polymerization of less than 300 tends to result in poor polymerization stability during emulsion polymerization. The upper limit of the degree of polymerization is preferably 4,000 or less, more preferably 3,800 or less, even more preferably 3,500 or less. When the degree of polymerization is more than 4,000, the solution viscosity tends to become excessively high during emulsion polymerization, which makes stirring and heat removal difficult. The degree of polymerization is determined by a method specified in JIS K 6726 (1994). Specifically, when the degree of saponification is less than 99.5 mol%, the PVA is saponified to or above a degree of saponification of 99.5 mol%, and the viscosity-average degree of polymerization (P) of the saponified PVA is determined by the following equation using a limiting viscosity [η] (liter/g) as measured in water at 30°C.

$$P = ([\eta] \times 10^4 / 8.29)^{(1/0.62)}$$

The mass ratio (A)/(B) of the polymer (A) to PVA (B) in the aqueous emulsion of the present invention is preferably, but not particularly limited to, 98/2 to 80/20, more preferably 95/5 to 85/15 on a solids basis. When the mass ratio is more than 98/2, the aqueous emulsion tends to have poor viscosity stability. When the mass ratio is less than 80/20, a coating film formed with the aqueous emulsion tends to be poor in water resistance.
The content of solids in the aqueous emulsion of the present invention is preferably 30 mass% or more and 60 mass% or less.

Production Method of Aqueous Emulsion

An example of a method for producing the aqueous emulsion of the present invention is one in which: 1) an ethylenically unsaturated monomer containing the ethylenically unsaturated monomer (p) and the ethylenically unsaturated monomer (q) is subjected to emulsion polymerization using a properly selected polymerization initiator in the presence of the PVA (B) serving as a dispersant. Examples of the method for controlling the emulsion polymerization include: 2) adjusting the amount of the PVA (B) added with respect to the ethylenically unsaturated monomer (p) and ethylenically unsaturated monomer (q); and 3) adjusting the amount of ion-exchanged water. An appropriate combination of these methods may be used as the method for producing the aqueous emulsion of the present invention.
The method for producing the aqueous emulsion of the present invention is not particularly limited, and an example of the method is emulsion polymerization of an ethylenically unsaturated monomer containing the ethylenically unsaturated monomer (p) and the ethylenically unsaturated monomer (q) in the presence of 0.5 to 40 parts by mass of the dispersant PVA (B) with respect to 100 parts by mass of the ethylenically unsaturated monomer containing the ethylenically unsaturated monomer (p) and the ethylenically unsaturated monomer (q). In this method, the method used to add the PVA(B) to the polymerization system is not particularly limited. Examples of the method for adding the PVA(B) include: adding the PVA(B) to the polymerization system all at once at the beginning of the polymerization; and adding the PVA(B) continuously during the polymerization. Adding the PVA(B) to the polymerization system all at once at the beginning of the polymerization is more preferred in terms of increasing the degree of grafting of the PVA (B) on the dispersoid in the aqueous emulsion.
The amount of the PVA (B) used as a dispersant in the present invention is not particularly limited. In a typical case, the amount of the PVA (B) is preferably 2 mass% or more, more preferably 3 mass% or more with respect to the total monomer units of the ethylenically unsaturated monomer containing the ethylenically unsaturated monomer (p) and the ethylenically unsaturated monomer (q). When the amount of the PVA (B) used is less than 2 mass%, sufficient emulsion polymerization stability tends not to be obtained. The amount of the PVA (B) used is preferably 20 mass% or less, more preferably 10 mass% or less with respect to the total monomer units of the ethylenically unsaturated monomer. When the amount of the PVA (B) used is more than 20 mass%, the water resistance, hot water resistance, and boiling resistance of a coating film formed from the resultant aqueous emulsion tend to decrease.
Common emulsion polymerization initiators such as water-soluble single initiators and water-soluble redox initiators may be used as the polymerization initiator used in the emulsion polymerization. Such initiators may be used alone, or two or more thereof may be used in combination. Redox initiators are more preferred.
Examples of the water-soluble single initiators include azo initiators and peroxides such as hydrogen peroxide and persulfates (such as potassium persulfate, sodium persulfate, and ammonium persulfate). Examples of the azo initiators include 2,2'-azobis(isobutyronitrile), 2,2'-azobis(2,4-dimethylvaleronitrile), and 2,2'-azobis(4-methoxy-2,4-dimethylvaleronitrile).
The redox initiator may be a combination of an oxidant and a reductant. A peroxide is preferred as the oxidant. Examples of the reductant include metal ions and reducing compounds. Examples of the combination of an oxidant and a reductant include: a combination of a peroxide and a metal ion; a combination of a peroxide and a reducing compound; and a combination of a peroxide, a metal ion, and a reducing compound. Examples of the peroxide include: hydrogen peroxide; hydroperoxides such as cumene hydroperoxide and t-butyl hydroperoxide; persulfates (potassium persulfate, sodium persulfate, and ammonium persulfate); t-butyl peroxyacetate; and peresters (t-butyl peroxybenzoate). Examples of the metal ion include metal ions that can accept a single electron, for example, such as $Fe^{2+}$, $Cr^{2+}$, $V^{2+}$, $Co^{2+}$, $Ti^{3+}$, and $Cu^{+}$. Examples of the reducing compound include sodium hydrogen sulfite, sodium hydrogen carbonate, tartaric acid, fructose, dextrose, sorbose, inositol, rongalite, and ascorbic acid. Preferred among these is a combination of at least one oxidant selected from the group consisting of hydrogen peroxide, potassium persulfate, sodium persulfate, and ammonium persulfate and at least one reductant selected from the group consisting of sodium hydrogen sulfite, sodium hydrogen carbonate, tartaric acid, rongalite, and ascorbic acid. More preferred is a combination of hydrogen peroxide and at least one reductant selected from the group consisting of sodium hydrogen sulfite, sodium hydrogen carbonate, tartaric acid, rongalite, and ascorbic acid.

For emulsion polymerization, for example, an alkali metal compound, a surfactant, a buffer, and a polymerization degree regulator may be used appropriately, provided that the effects of the present invention are not impaired.

The alkali metal compound is not particularly limited, as long as it contains an alkali metal (sodium, potassium, rubidium, cesium), and may be an alkali metal ion itself or a compound containing an alkali metal.

The content of the alkali metal compound (in terms of an alkali metal) can be selected as appropriate depending on the type of the alkali metal compound used, and is preferably 100 to 15,000 ppm, more preferably 120 to 12,000 ppm, most preferably 150 to 8,000 ppm with respect to the total mass of the aqueous emulsion (in terms of solids). When the content of the alkali metal compound is less than 100 ppm, the stability of emulsion polymerization for producing the aqueous emulsion tends to decrease, whereas, when the content is more than 15,000 ppm, a coating film formed from the aqueous emulsion tends to be stained. The content of the alkali metal compound may be measured with an ICP optical emission spectrometer. The term "ppm" as used herein means ppm by mass.

Specific examples of the compound containing an alkali metal include weakly basic alkali metal salts (e.g., alkali metal carbonates, alkali metal acetates, alkali metal bicarbonates, alkali metal phosphates, alkali metal sulfates, alkali metal halides, and alkali metal nitrates), and strongly basic alkali metal compounds (e.g., alkali metal hydroxides and alkali metal alkoxides). These alkali metal compounds may be used alone, or two or more thereof may be used in combination.

Examples of the weakly basic alkali metal salts include alkali metal carbonates (such as sodium carbonate, potassium carbonate, rubidium carbonate, and cesium carbonate), alkali metal bicarbonates (such as sodium hydrogen carbonate and potassium hydrogen carbonate), alkali metal phosphates (such as sodium phosphate and potassium phosphate), alkali metal carboxylates (such as sodium acetate, potassium acetate, and cesium acetate), alkali metal sulfates (such as sodium sulfate, potassium sulfate, and cesium sulfate), alkali metal halides (such as cesium chloride, cesium iodide, potassium chloride, and sodium chloride), and alkali metal nitrates (such as sodium nitrate, potassium nitrate, and cesium nitrate). Among these, alkali metal carboxylates, alkali metal carbonates, and alkali metal bicarbonates, which can behave as weakly acidic and strongly basic salts when dissociated, are preferred in terms of imparting basicity to the emulsion. Alkali metal carboxylates are more preferred in this regard.

When used, the weakly basic alkali metal salt also acts as a pH buffer in the emulsion polymerization, and allows the emulsion polymerization to stably take place.

A non-ionic surfactant, an anionic surfactant, or a cationic surfactant may be used as the surfactant. Examples of the non-ionic surfactant include polyoxyethylene alkyl ethers, polyoxyethylene alkyl phenyl ethers, polyoxyethylene fatty acid esters, polyoxyalkylene alkyl ethers, polyoxyethylene derivatives, sorbitan fatty acid esters, polyoxyethylene sorbitan fatty acid esters, polyoxyethylene sorbitol fatty acid esters, and glycerin fatty acid esters. Examples of the anionic surfactant include alkyl sulfates, alkylaryl sulfates, alkyl sulfonates, sulfates of hydroxy alkanols, sulfosuccinic acid esters, and sulfates and phosphates of alkyl or alkylaryl polyethoxy alkanols. Examples of the cationic surfactant include alkylamine salts, quaternary ammonium salts, and polyoxyethylene alkylamines. The amount of the surfactant used is preferably 2 mass% or less with respect to the total amount of the constituent ethylenically unsaturated monomers of polymer (A). When the amount of the surfactant used is more than 2 mass%, the water resistance, hot water resistance, and boiling resistance tend to decrease.

Examples of the buffer include: acids such as acetic acid, hydrochloric acid, and sulfuric acid; bases such as ammonia, amine, sodium hydroxide, potassium hydroxide, and calcium hydroxide; and carbonates, phosphates, and acetates of alkali metals. Examples of the polymerization degree regulator include mercaptans and alcohols.

The dispersion medium used in the emulsion polymerization is preferably an aqueous medium based on water. The aqueous medium based on water may contain an aqueous organic solvent (such as alcohol or ketone) freely soluble in water. The term "aqueous medium based on water" as used herein refers to a dispersion medium containing 50 mass% or more of water. In terms of cost and environmental burden, the dispersion medium is preferably an aqueous medium containing 90 mass% or more of water, and is more preferably water alone. The method for producing the aqueous emulsion preferably includes, before the start of emulsion polymerization, heating the dispersant PVA (B) to dissolve the PVA (B) in the dispersion medium, cooling the resultant solution, and purging the solution with nitrogen. The heating temperature is preferably 90°C or higher. The temperature during the emulsion polymerization is preferably 20 to 85°C, more preferably 40 to 80°C.

The aqueous emulsion of the present invention can be used in adhesive applications such as in woodworking and paper processing, and in applications such as in paints and fiber processing. The aqueous emulsion is particularly suitable for use in adhesive applications. The emulsion can be used by itself, or, as required, may be used in the form of an emulsion composition by being combined with a conventionally known emulsion or common additives, provided that the effects of the present invention are not impaired by the use of such conventional emulsions and additives. Examples of the additives include organic solvents (e.g., aromatic compounds such as toluene and xylene, alcohols, ketones, esters, and halogenated solvents), cross-linking agents, surfactants, plasticizers, suspension stabilizers, thickeners, fluidity improvers, preservatives, anti-foaming agents, fillers, wetting agents, colorants, binders, and water retention agents. These may be used alone, or two or more thereof may be used in combination.

Adhesive

An adhesive containing the aqueous emulsion is an embodiment of the present invention. The adhesive is obtained by adding a secondary component, such as a pH adjuster, a plasticizer, or a viscosity adjuster, to a primary component comprising the aqueous emulsion of the present invention. The secondary component may additionally contain a cross-linking agent, as long as it does not depart from the gist of the present invention.

Examples of the plasticizer include dicarboxylic acid ester compounds and aryloxy-containing compounds. Examples of the dicarboxylic acid ester compounds include 2,2,4-trimethyl-1,3-pentanediol diisobutyrate, methyl adipate, dimethyl succinate, dimethyl glutarate, dibutyl phthalate, diphenyl phthalate, dihexyl phthalate, dicyclohexyl phthalate, dihydroabietyl phthalate, and dimethyl isophthalate. Examples of the aryloxy group of the aryloxy-containing compounds include a phenoxy group, and a substituted phenoxy group such as a $C_1$ to $C_{12}$ alkoxyphenoxy group or a $C_1$ to $C_{12}$ alkylphenoxy group. The number of substituents is preferably 1 to 5, more preferably 1 to 3. A substituted or unsubstituted phenoxy-containing compound is preferred as the aryloxy-containing compound, and more preferred is a substituted or unsubstituted phenoxy-containing compound containing no vinyl group. Specific examples of the aryloxy-containing compound include phenoxyethanol, ethylene glycol monophenyl ether, polypropylene glycol monophenyl ether, polyoxyethylene nonylphenyl ether, and polyoxyethylene dinonylphenyl ether. The plasticizer may be used alone, or two or more thereof may be used in combination.

The content of the plasticizer may be adjusted as appropriate. Typically, the plasticizer content is preferably 0.5 to 20 parts by mass, more preferably 1.0 to 10 parts by mass with respect to 100 parts by mass of the primary component in terms of a solid content. With the plasticizer content falling in these ranges, an adhesive having excellent adhesiveness can be obtained.

Examples of the cross-linking agent include polyfunctional isocyanate compounds; hydrazine compounds; polyamidoamine epichlorohydrin adducts; aluminum salts such as aluminum chloride, aluminum nitrate, and hydrates thereof; and glyoxal-based resins such as urea-glyoxal-based resins. The polyfunctional isocyanate compound has two or more isocyanate groups within the molecule. Examples of the polyfunctional isocyanate compound include tolylene diisocyanate (TDI), hydrogenated TDI, trimethylolpropane-TDI adducts (e.g., "Desmodur L" of Bayer AG), triphenylmethane triisocyanate, methylene bisphenyl isocyanate (MDI), polymethylene polyphenyl polyisocyanate (PMDI), hydrogenated MDI, polymeric MDI, hexamethylene diisocyanate (HDI), xylylene diisocyanate (XDI), 4,4-dicyclohexylmethane diisocyanate, and isophorone diisocyanate (IPDI). The polyfunctional isocyanate compound used may be a prepolymer resulting from polymerization of polyol with excess polyisocyanate and having a terminal group containing an isocyanate group. These cross-linking agents may be used alone, or two or more thereof may be used in combination.

The cross-linking agent may be a hydrazine compound. The hydrazine compound is not particularly limited, as long as it is a compound having a hydrazino group ($H_2N$-NH-) within the molecule. Examples of the hydrazine compound include: hydrazine; hydrazine hydrate; mineral salts of hydrazine (for example, hydrazine hydrochloride, hydrazine sulfate, hydrazine nitrate, hydrazine sulfite, hydrazine phosphate, hydrazine thiocyanate, and hydrazine carbonate), and organic salts of hydrazine (for example, hydrazine formate, and hydrazine oxalate); monosubstituted hydrazines (for example, methylhydrazine, ethylhydrazine, propylhydrazine, tert-butylhydrazine, and allylhydrazine); and symmetrically disubstituted hydrazines (for example, 1,1-dimethylhydrazine, and 1,1-diethylhydrazine). Other examples of the hydrazine compound include polyfunctional hydrazide compounds such as oxalic acid dihydrazide, malonic acid dihydrazide, succinic acid dihydrazide, adipic acid dihydrazide, azelaic acid dihydrazide, sebacic acid dihydrazide, dodecanedioic acid dihydrazide, maleic acid dihydrazide, fumaric acid dihydrazide, diglycolic acid dihydrazide, tartaric acid dihydrazide, malic acid dihydrazide, isophthalic acid dihydrazide, terephthalic acid dihydrazide, and dimer acid dihydrazide. These hydrazine compounds may be used alone, or two or more thereof may be used in combination. Particularly preferred is adipic acid dihydrazide.

The content of the cross-linking agent may be adjusted as appropriate. Typically, the content of the cross-linking agent is preferably 3 to 100 parts by mass, more preferably 5 to 50 parts by mass with respect to 100 parts by mass of the primary component in terms of a solid content. With the content of the cross-linking agent falling in these ranges, an adhesive having excellent adhesiveness can be inexpensively produced.

The adhesive of the present invention obtained in the manner described above can be used for adherends such as paper, wood, and plastics. The adhesive is particularly preferred for wood among these materials. The adhesive also shows high adhesiveness for conifers, which produce a large amount of resin, as well as for broadleaf trees having dense wood grain. This makes the adhesive applicable to applications such as laminated wood, plywood, decorated plywood, and fiberboard.

The aqueous emulsion of the present invention can be used in a wide range of applications, including, for example, inorganic binders, cement admixtures, and mortar primers. The aqueous emulsion also can be effectively used in the form of what is commonly called a powder emulsion after being prepared into a powder form using a technique such as spray drying.

## EXAMPLES

The following describes the present invention in greater detail by way of Examples. It should be noted that the present invention is in no way limited by the following Examples, and various changes may be made by a person with ordinary skill in the art within the technical idea of the present invention. In Examples and Comparative Examples, "%" and "part(s)" are by mass, unless otherwise specifically stated.

By the methods described below, aqueous emulsions were measured for their emulsion polymerization stability, and adhesives were measured for their adhesiveness (normal state, water resistance, hot water resistance, and boiling resistance), heat resistance, stain resistance under heat treatment, and viscosity stability.

### (1) Emulsion Polymerization Stability of Aqueous Emulsion

An amount of 500 g of each of the aqueous emulsions obtained in Examples and Comparative Examples was filtered through a 60-mesh metal sieve, and the filtration residue was weighed. Evaluation was made as follows.

A: The amount of filtration residue is 1.0% or less.
B: The amount of filtration residue is more than 1.0%.
C: Filtration fails due to the particles being coarse because of unstable polymerization.

### (2) Evaluation of Adhesiveness (Evaluation in Normal State and Evaluation of Hot Water Resistance and Boiling Resistance)

Adherend: Tsuga/Tsuga (Tsuga: *Tsuga sieboldii*)
Spread: 150 g/$m^2$ (double spread)
Pressing conditions: At 20°C for 24 hours with a pressure of 10 kg/$cm^2$ Measurement conditions

The compression shear bond strength was measured according to JIS K 6852 (1994) under the following conditions.

Normal state: The specimen was aged at 20°C for 7 days, and the as-aged specimen was subjected to measurement.

Hot water resistance: The specimen was immersed in 60°C water for 3 hours, and the wet specimen was subjected to measurement.

Boiling resistance: The specimen was aged at 20°C for 7 days, and immersed in boiling water for 4 hours. After being dried in air at 60°C for 20 hours, the specimen was immersed in boiling water for 4 hours, and was allowed to cool in water at room temperature (20C°) before being subjected to measurement in a wet state.

### (3) Heat Resistance of Adhesive

The same specimens used for the adhesiveness evaluation were prepared. The specimens were aged at 20°C for 7 days, and heated with a thermostat bath at 80°C for 1 hour. After being taken out of the bath, the heated specimens were immediately measured for compression shear bond strength according to JIS K 6852:1994.

### Measurement Conditions

Heat resistance: The specimens were aged at 20°C for 7 days, and heated with a thermostat bath at 80°C for 1 hour. After being taken out of the bath, the heated specimens were immediately measured for heat resistance.

### (4) Evaluation of Adhesiveness by EN204 (Evaluation in Normal State and Evaluation of Water Resistance and Boiling Resistance)

Adherend: Buna/Buna (Buna: *Fagus crenata*)
Spread: 170 g/$m^2$ (double spread)
Pressing conditions: At 20°C for 3 hours with a pressure of 0.5 N/$mm^2$ Measurement conditions
Normal state: The specimen was aged at 20°C for 7 days, and the as-aged specimen was subjected to measurement.

Water resistance: The specimen was immersed in 20°C water for 4 days, and the wet specimen was subjected to measurement.
Boiling resistance: The specimen was aged at 20°C for 7 days, and immersed in boiling water for 6 hours. The specimen was then immersed in 20°C water for 2 hours before being subjected to measurement in a wet state.

(5) Evaluation of Stain Resistance of Coating Film

Each of the adhesives obtained in Examples and Comparative Examples was cast onto a polyethylene terephthalate (PET) film at 20°C and 65% RH, and dried for 7 days, after which the resultant dry product was separated from the PET film to obtain a 500 μm-thick dry coating film. This coating film was secured to a stainless steel mold (a 20 cm × 20 cm metal frame with a thickness of 1 cm) by means of a clip, and was heat-treated with a Geer oven at 120C° for 3 hours, after which the stain resistance of the coating film was visually evaluated as follows.

A: No staining
B: Slight staining
C: Yellow staining

(6) Evaluation of Viscosity Stability

The viscosity ($\eta_0$) of each of the adhesives obtained in Examples and Comparative Examples was measured with a B-type viscometer (40°C, 20 rpm). The adhesive was then allowed to stand at 40°C for 1 month, and measured for viscosity ($\eta_{30}$) with the B-type viscometer (40°C, 20 rpm). Evaluation was made as follows on the basis of a viscosity increase factor defined as $\eta_{30}/\eta_0$.

A: The viscosity increase factor is less than 1.5.
B: The viscosity increase factor is 1.5 or more and 2.0 or less.
C: The viscosity increase factor is more than 2.0 and less than 3.0.
D: The viscosity increase factor is 3.0 or more.

Example 1

Synthesis of Em-1

An amount of 220 g of ion-exchanged water and 20.9 g of Kuraray Poval 28-98 (manufactured by Kuraray Co., Ltd. and having a degree of saponification of 98.5 mol% and an average degree of polymerization of 1,700) were charged into a 1-L glass polymerization reaction vessel equipped with a reflux condenser, a dropping funnel, a thermometer, and a nitrogen inlet. The mixture was stirred at 95°C for 2 hours to fully dissolve the contents. Thereafter, 0.3 g of sodium acetate (NaOAc) was added to the polymerization reaction vessel, and dissolved into the mixture to obtain an aqueous PVA solution. The aqueous PVA solution was cooled, and charged into a polymerization reaction vessel that had been purged with nitrogen. After the solution was heated to 60°C under stirring at 200 rpm, 2.4 g of a 20% aqueous solution of tartaric acid and 3.2 g of a 5% hydrogen peroxide solution (each in an amount of 0.015 in terms of a molar ratio with respect to the total amount of the monomer initially charged) were added in shots, and 27 g of vinyl acetate was added to initiate polymerization. Completion of the initial polymerization was confirmed (the remaining amount of vinyl acetate was less than 1%) 30 minutes after the start of the polymerization. This was followed by addition of 1 g of a 10% aqueous solution of tartaric acid, and 3.2 g of a 5% hydrogen peroxide solution. Thereafter, an aqueous solution containing 250 g of vinyl acetate, 5.6 g of N-(2-methacryloyloxyethyl)ethylene urea, and 2.8 g of acrylic acid in a concentration of 12% in terms of a solid content was continuously added for a time period of 2 hours. The polymerization was allowed to proceed to completion at a maintained polymerization temperature of 80°C to give a polyvinyl acetate emulsion (Em-1) having a concentration of 49.3% in terms of a solid content. The emulsion (Em-1) was evaluated for emulsion polymerization stability, and the amount of filtration residue was determined to be 1.0% or less. The result of polymerization stability evaluation for Em-1 is presented in Table 1.

Adhesive-1

After adjusting pH to 5.5 with addition of ammonia water to Em-1, 5 parts by mass of phenoxyethanol as a plasticizer was added and mixed to 100 parts by mass (a solid content) of Em-1 to prepare an adhesive (adhesive-1). The adhesive-1 was then evaluated for adhesiveness under various conditions, as well as for heat resistance, stain resistance of a coating film, and viscosity stability, using the foregoing methods. The results are presented in Table 2.

Example 2

Synthesis of Em-2

An amount of 200 g of ion-exchanged water and 21 g of an ethylene-modified PVA having a degree of polymerization of 1,700, a degree of saponification of 95 mol%, and a degree of ethylene modification of 5 mol% were charged into a 1-L glass polymerization reaction vessel equipped with a reflux condenser, a dropping funnel, a thermometer, and a nitrogen inlet. The mixture was stirred at 95°C for 2 hours to fully dissolve the contents. Thereafter, 0.3 g of sodium acetate (NaOAc) was added to the polymerization reaction vessel, and dissolved into the mixture to obtain an aqueous modified PVA solution. The aqueous ethylene-modified PVA solution was cooled, and charged into a polymerization reaction vessel that had been purged with nitrogen. After the solution was heated to 60°C under stirring at 200 rpm, 2.4 g of a 20% aqueous solution of tartaric acid and 3.2 g of a 5% hydrogen peroxide solution (each in an amount of 0.015 in terms of a molar ratio with respect to the total amount of the monomer initially charged) were added, and 28 g of vinyl acetate was added to initiate polymerization. Completion of the initial polymerization was confirmed (the remaining amount of vinyl acetate was less than 1%) 30 minutes after the start of the polymerization. This was followed by addition of 1 g of a 10% aqueous solution of tartaric acid, and 3.2 g of a 5% hydrogen peroxide solution. Thereafter, an aqueous solution containing 250 g of vinyl acetate, 16.5 g of N-(2-methacryloyloxyethyl)ethylene urea, and 1.4 g of methacrylic acid in a concentration of 20% in terms of a solid content was continuously added for a time period of 2 hours. The polymerization was allowed to proceed to completion at a maintained polymerization temperature of 80°C to give a polyvinyl acetate emulsion (Em-2) having a concentration of 49.9% in terms of a solid content. The emulsion (Em-2) was evaluated for polymerization stability, and the amount of filtration residue was determined to be 1.2%. The result of polymerization stability evaluation for Em-2 is presented in Table 2. Em-2 was used to prepare an adhesive-2, using the same method used in Example 1. The adhesive-2 was then evaluated for adhesiveness under various conditions, as well as for heat resistance, stain resistance of a coating film, and viscosity stability. The results are presented in Table 2.

Example 3

An aqueous emulsion (Em-3) was obtained in the same manner as in Example 1, except that the acrylic acid was replaced with acrylamide. The evaluation result for the emulsion polymerization stability of Em-3 is presented in Table 1. Em-3 was used to prepare an adhesive-3, using the same method used in Example 1. The adhesive-3 was then evaluated for adhesiveness under various conditions, as well as for heat resistance, stain resistance of a coating film, and viscosity stability. The results are presented in Table 2.

Example 4

An aqueous emulsion (Em-4) was obtained in the same manner as in Example 2, except that N-(2-methacryloyloxyethyl)ethylene urea was used in an amount of 1.0 mass%, instead of 6.0 mass%. The evaluation result for the emulsion polymerization stability of Em-4 is presented in Table 1. Em-4 was used to prepare an adhesive-4, using the same method used in Example 1. The adhesive-4 was then evaluated for adhesiveness under various conditions, as well as for heat resistance, stain resistance of a coating film, and viscosity stability. The results are presented in Table 2.

Example 5

An aqueous emulsion (Em-5) was obtained in the same manner as in Example 4, except that the N-(2-methacryloyloxyethyl)ethylene urea was replaced with N-(2-methacryloylamidoethyl)ethylene urea. The evaluation result for the emulsion polymerization stability of Em-5 is presented in Table 1. Em-5 was used to prepare an adhesive-5, using the same method used in Example 1. The adhesive-5 was then evaluated for adhesiveness under various conditions, as well as for heat resistance, stain resistance of a coating film, and viscosity stability. The results are presented in Table 2.

Example 6

An aqueous emulsion (Em-6) was obtained in the same manner as in Example 5, except that 1.0 mass% of acrylic acid was additionally added to the aqueous solution of N-(2-methacryloylamidoethyl)ethylene urea and methacrylic acid. The evaluation result for the emulsion polymerization stability of Em-6 is presented in Table 1. Em-6 was used to prepare an adhesive-6, using the same method used in Example 1. The adhesive-6 was then evaluated for adhesiveness under various conditions, as well as for heat resistance, stain resistance of a coating film, and viscosity stability. The results are presented in Table 2.

Example 7

An adhesive-7 was prepared by adding and mixing 1.5 parts by mass of aluminum nitrate nonahydrate as a cross-linking agent with respect to 100 parts by mass (a solid content) of adhesive-6. The adhesive-7 was then evaluated for adhesiveness under various conditions, as well as for heat resistance, stain resistance of a coating film, and viscosity stability. The results are presented in Table 2.

Example 8

An aqueous emulsion (Em-7) was obtained in the same manner as in Example 5, except that an ethylene-modified PVA having a degree of polymerization of 1,700, a degree of saponification of 90 mol%, and a degree of ethylene modification of 5 mol% was used as PVA(B). The evaluation result for the emulsion polymerization stability of Em-7 is presented in Table 1. Em-7 was used to prepare an adhesive-8, using the same method used in Example 1. The adhesive-8 was then evaluated for adhesiveness under various conditions, as well as for heat resistance, stain resistance of a coating film, and viscosity stability. The results are presented in Table 2.

Example 9

An aqueous emulsion (Em-8) was obtained in the same manner as in Example 2, except that 1.0 mass% of N-(3-allyloxy-2-hydroxypropyl)aminoethylethylene urea was used instead of N-(2-methacryloyloxyethyl)ethylene urea. The evaluation result for the emulsion polymerization stability of Em-8 is presented in Table 1. Em-8 was used to prepare an adhesive-9, using the same method used in Example 1. The adhesive-9 was then evaluated for adhesiveness under various conditions, as well as for heat resistance, stain resistance of a coating film, and viscosity stability. The results are presented in Table 2.

Example 10

An aqueous emulsion (Em-9) was obtained in the same manner as in Example 1, except that N-(2-methacryloyloxyethyl)ethylene urea was not used. The evaluation result for the emulsion polymerization stability of Em-9 is presented in Table 1.

Adhesive-10

Em-5 and Em-9 were mixed in a mass ratio of 1:1. After adjusting the pH of the mixed emulsion to 5.5, 5 parts by mass of phenoxyethanol as a plasticizer was added and mixed to 100 parts by mass (a solid content) of the emulsion to prepare an adhesive (adhesive-10). The adhesive-10 was then evaluated for adhesiveness under various conditions, as well as for heat resistance, stain resistance of a coating film, and viscosity stability, using the foregoing methods. The results are presented in Table 2.

Comparative Example 1

Five parts by mass of phenoxyethanol as a plasticizer was added and mixed to 100 parts by mass (a solid content) of Em-9, and 1.0 part by mass of aluminum trichloride was added as a cross-linking agent to prepare an adhesive-11. The adhesive-11 was then evaluated for adhesiveness under various conditions, as well as for heat resistance, stain resistance of a coating film, and viscosity stability, using the foregoing methods. The results are presented in Table 2.

Comparative Example 2

An aqueous emulsion (Em-10) was obtained in the same manner as in Example 2, except that N-(2-methacryloyloxyethyl)ethylene urea and methacrylic acid were not used. The evaluation result for the emulsion polymerization stability of Em-10 is presented in Table 1. Em-10 was used to prepare an adhesive-12, using the same method used in Example 1, and the adhesive-12 was evaluated for adhesiveness under various conditions, as well as for heat resistance, stain resistance of a coating film, and viscosity stability, using the foregoing methods. The results are presented in Table 2.

Comparative Example 3

An aqueous emulsion (Em-11) was obtained in the same manner as in Example 1, except that 3.0 mass% of

N-methylolacrylamide was used instead of N-(2-methacryloyloxyethyl)ethylene urea, and that acrylic acid was not used. The evaluation result for the emulsion polymerization stability of Em-11 is presented in Table 1. Five parts by mass of phenoxyethanol as a plasticizer was added and mixed to 100 parts by mass (a solid content) of Em-11, and 1.5 parts by mass of aluminum trichloride was added as a cross-linking agent to prepare an adhesive-13. The adhesive-13 was then evaluated for adhesiveness under various conditions, as well as for heat resistance, stain resistance of a coating film, and viscosity stability, using the foregoing methods. The results are presented in Table 2.

Comparative Example 4

An emulsion (Em-12) was prepared following Example I-b of Patent Literature 8 (JP 2003-523476 T). The composition is as shown in Table 1. The evaluation result for the emulsion polymerization stability of Em-12 is presented in Table 1. Em-12 was used to prepare an adhesive-14, using the same method used in Example 1, and the adhesive-14 was evaluated for adhesiveness under various conditions, as well as for heat resistance, stain resistance of a coating film, and viscosity stability, using the foregoing methods. The results are presented in Table 2.

[Table 1]

| | Ethylenically unsaturated monomer (p) | | Ethylenically unsaturated monomer (q) | | PVA(B) | | | Emulsion polymerization stability |
|---|---|---|---|---|---|---|---|---|
| | Type | Mass % | Type | Mass% | Viscosity-average degree of polymerization | Degree of saponification (mol%) | Degree of ethylene modification (mol%) | |
| Em-1 | N-(2-Methacryloyloxyethyl) ethylene urea | 2.0 | Acrylic acid | 1.0 | 1700 | 98.5 | - | A |
| Em-2 | N-(2-Methacryloyloxyethyl) ethylene urea | 6.0 | Methacrylic acid | 0.5 | 1700 | 95 | 5 | B |
| Em-3 | N-(-2-Methacryloyloxyethyl) ethylene urea | 2.0 | Acrylamide | 1.0 | 1700 | 98.5 | - | A |
| Em-4 | N-(2-Methacryloyloxyethyl) ethylene urea | 1.0 | Methacrylic acid | 0.5 | 1700 | 95 | 5 | A |
| Em-5 | N-(2-Methacryloylamidoethyl) ethylene urea | 1.0 | Methacrylic acid | 0.5 | 1700 | 95 | 5 | A |
| Em-6 | N-(2-Methacryloylamidoethyl) ethylene urea | 1.0 | Methacrylic acid/ Acrylic acid (1/2) | 1.5 | 1700 | 95 | 5 | A |
| Em-7 | N-(2-Methacryloylamidoethynethylene urea | 1.0 | Methacrylic acid | 0.5 | 1700 | 90 | 5 | A |
| Em-8 | N-(3-Allyloxy-2-hydroxypropyl) aminoethyl ethylene urea | 1.0 | Methacrylic acid | 0.5 | 1700 | 95 | 5 | A |
| Em-9 | Not used | - | Acrylic acid | 1.0 | 1700 | 98.5 | | A |
| Em-10 | Not used | - | Not used | | 1700 | 98.5 | | A |
| Em-11 | N-Methylolacrylamide | 3.0 | Not used | | 1700 | 98.5 | - | C |
| Em-12 | Ethylureido methacrylate | 0.5 | Methacrylic acid | 4.0 | (Ethoxylated fatty alcohol sulfate), (ethoxylated fatty alcohol) | | | A |

[Table 2]

| | Type of adhesive | Adhesiveness evaluation 1 (JIS K 6852: 1994) | | | Heat resistance | Adhesiveness evaluation 2 (EN204) | | | Resistance to staining of coating film | Viscosity stability |
|---|---|---|---|---|---|---|---|---|---|---|
| | | Normal state | Hot water resistance | Boiling resistance | | Normal state | Water resistance | Boiling resistance | | |
| | | $Kg/cm^2$ | $Kg/cm^2$ | $Kg/cm^2$ | $Kg/cm^2$ | $N/mm^2$ | $N/mm^2$ | $N/mm^2$ | | |
| Ex. 1 | Adhesive-1 | 105 | 40 | 27 | 57 | 8.2 | 2.2 | 1.2 | A | A |
| Ex. 2 | Adhesive-2 | 109 | 46 | 30 | 71 | 8.1 | 2.0 | 1.0 | A | A |
| Ex. 3 | Adhesive-3 | 117 | 30 | 23 | 66 | 8.8 | 1.6 | 0.8 | A | B |
| Ex. 4 | Adhesive-4 | 113 | 45 | 31 | 70 | 8.5 | 2.4 | 1.5 | A | A |
| Ex. 5 | Adhesive-5 | 118 | 48 | 38 | 81 | 8.8 | 2.6 | 1.2 | A | A |
| Ex. 6 | Adhesive-6 | 111 | 39 | 27 | 67 | 8.1 | 2.1 | 0.9 | A | A |
| Ex. 7 | Adhesive-7 | 114 | 36 | 33 | 69 | 8.4 | 1.6 | 1.1 | A | A |
| Ex. 8 | Adhesive-8 | 108 | 40 | 21 | 69 | 8.2 | 1.9 | 1 | A | A |
| Ex. 9 | Adhesive-9 | 110 | 35 | 33 | 57 | 8.5 | 2.2 | 1.1 | A | B |
| Ex. 10 | Adhesive-10 | 115 | 46 | 37 | 75 | 8.4 | 2.0 | 1 | A | A |
| Com. Ex. 1 | Adhesive-11 | 111 | 9 | 2 | 19 | 8 | 0.2 | N/A | B | A |
| Com. Ex. 2 | Adhesive-12 | 102 | 4 | N/A | 23 | 7.6 | N/A | N/A | A | A |
| Com. Ex. 3 | Adhesive-13 | 115 | 8 | 18 | 47 | 9 | N/A | 0.8 | C | C |
| Com. Ex. 4 | Adhesive-14 | 97 | 13 | N/A | 20 | 8.1 | 0.2 | N/A | A | A |

In the table, N/A indicates that the property is not measurable.

INDUSTRIAL APPLICABILITY

An adhesive using an aqueous emulsion of the present invention excels in water resistance (particularly, hot water resistance and boiling resistance) and viscosity stability, in addition to having excellent heat resistance. The adhesive can form a coating film that resists staining in heat treatment, and can be used not only in adhesive applications such as in woodworking and paper processing, but in other applications such as in paints and fiber processing.

## Claims

1. An aqueous emulsion comprising an ethylenically unsaturated monomer unit-containing polymer (A) as a dispersoid and a vinyl alcohol polymer (B) as a dispersant, wherein the ethylenically unsaturated monomer unit-containing polymer (A) comprises:

   a structural unit derived from a radical-polymerizable ethylenically unsaturated monomer (p) having a functional group represented by the following general formula (P); and
   a structural unit derived from a radical-polymerizable ethylenically unsaturated monomer (q) having a functional group represented by the following general formula (Q),

   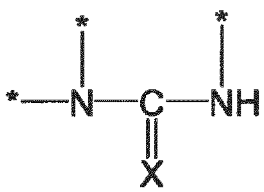

   (P)

   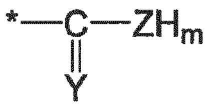

   (Q)

   wherein X and Y are the same or different, and each represent an oxygen atom or a sulfur atom, Z is an oxygen atom or a nitrogen atom, * represents a bond, and m is 1 or 2,
   the structural unit derived from the ethylenically unsaturated monomer (p) has a content of 0.2 to 10.0 mass% with respect to the polymer (A), and the structural unit derived from the ethylenically unsaturated monomer (q) has a content of 0.002 to 6.0 mass% with respect to the polymer (A),
   the polymer (A) comprises a ternary copolymer of the ethylenically unsaturated monomer (p), the ethylenically unsaturated monomer (q), and an ethylenically unsaturated monomer (r), and the ethylenically unsaturated monomer (r) is copolymerizable with the ethylenically unsaturated monomer (p) and the ethylenically unsaturated monomer (q),
   the ethylenically unsaturated monomer (r) is at least one selected from the group consisting of a vinyl ester monomer and a styrene monomer,
   the ethylenically unsaturated monomer (p) is N-(2-methacryloyloxy-ethyl)ethylene urea, or N-(2-methacrylamidoethyl)ethylene urea, and
   the ethylenically unsaturated monomer (q) is at least one selected from the group consisting of (meth)acrylic acid and acrylamide.

2. The aqueous emulsion according to claim 1, wherein the ethylenically unsaturated monomer (p) and the ethylenically unsaturated monomer (q) have a mass ratio (p)/(q) of 99/1 to 45/55.

3. The aqueous emulsion according to claim 1 or 2, further comprising a copolymer (C) of the ethylenically unsaturated monomer (q) and an ethylenically unsaturated monomer (s) copolymerizable with the ethylenically unsaturated monomer (q).

4. The aqueous emulsion according to claim 3, wherein the ethylenically unsaturated monomer (s) is at least one

selected from the group consisting of a vinyl ester monomer and a styrene monomer.

5. The aqueous emulsion according to any one of claims 1 to 4, wherein the ethylenically unsaturated monomer (q) is (meth)acrylic acid.

6. The aqueous emulsion according to any one of claims 1 to 5, wherein the mass ratio (A)/(B) of the polymer (A) to the vinyl alcohol polymer (B) is 98/2 to 80/20 on a solids basis.

7. The aqueous emulsion according to any one of claims 1 to 6, wherein the vinyl alcohol polymer (B) is an ethylene-modified vinyl alcohol polymer.

8. The aqueous emulsion according to any one of claims 1 to 7, wherein the vinyl alcohol polymer (B) has a viscosity-average degree of polymerization of 300 to 4,000, and a degree of saponification of 80 to 99.9 mol%.

9. A method for producing the aqueous emulsion of any one of claims 1 to 8, wherein a monomer comprising the ethylenically unsaturated monomer (p) and the ethylenically unsaturated monomer (q) is subjected to emulsion polymerization in the presence of the vinyl alcohol polymer (B).

10. An adhesive comprising the aqueous emulsion of any one of claims 1 to 8.

**Patentansprüche**

1. Wässrige Emulsion, umfassend ein ethylenisch ungesättigte Monomereinheiten enthaltendes Polymer (A) als Dispersoid und ein Vinylalkoholpolymer (B) als Dispergiermittel, wobei das ethylenisch ungesättigte Monomereinheiten enthaltende Polymer (A) umfasst:

   eine Struktureinheit, abgeleitet von einem radikalisch polymerisierbaren ethylenisch ungesättigten Monomer (p) mit einer funktionellen Gruppe, dargestellt durch die nachstehende allgemeine Formel (P); und
   eine Struktureinheit, abgeleitet von einem radikalisch polymerisierbaren ethylenisch ungesättigten Monomer (q) mit einer funktionellen Gruppe, dargestellt durch die nachstehende allgemeine Formel (Q),

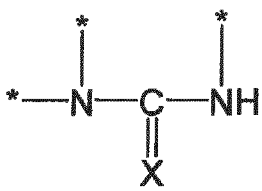

(P)

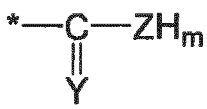

(Q)

   wobei X und Y gleich oder verschieden sind und jeweils ein Sauerstoffatom oder ein Schwefelatom darstellen, Z ein Sauerstoffatom oder ein Stickstoffatom ist, * eine Bindung darstellt und m 1 oder 2 ist,
   die von dem ethylenisch ungesättigten Monomer (p) abgeleitete Struktureinheit einen Gehalt von 0,2 bis 10,0 Massen-%, bezogen auf das Polymer (A), aufweist, und die von dem ethylenisch ungesättigten Monomer (q) abgeleitete Struktureinheit einen Gehalt von 0,002 bis 6,0 Massen-%, bezogen auf das Polymer (A), aufweist,
   das Polymer (A) ein ternäres Copolymer aus dem ethylenisch ungesättigten Monomer (p), dem ethylenisch ungesättigten Monomer (q) und einem ethylenisch ungesättigten Monomer (r) umfasst, und das ethylenisch ungesättigte Monomer (r) mit dem ethylenisch ungesättigten Monomer (p) und dem ethylenisch ungesättigten Monomer (q) copolymerisierbar ist,
   das ethylenisch ungesättigte Monomer (r) mindestens eines ist, das aus der Gruppe ausgewählt ist, die aus einem Vinylester-Monomer und einem Styrol-Monomer besteht,
   das ethylenisch ungesättigte Monomer (p) N-(2-Methacryloyloxyethyl)ethylenharnstoff oder N-(2-Methacrylamidoethyl)ethylenharnstoff ist, und

das ethylenisch ungesättigte Monomer (q) mindestens eines ist, das aus der Gruppe ausgewählt ist, die aus (Meth)acrylsäure und Acrylamid besteht.

2. Wässrige Emulsion nach Anspruch 1, wobei das ethylenisch ungesättigte Monomer (p) und das ethylenisch ungesättigte Monomer (q) ein Massenverhältnis (p)/(q) von 99/1 bis 45/55 aufweisen.

3. Wässrige Emulsion nach Anspruch 1 oder 2, die weiter ein Copolymer (C) aus dem ethylenisch ungesättigten Monomer (q) und einem ethylenisch ungesättigten Monomer (s), das mit dem ethylenisch ungesättigten Monomer (q) copolymerisierbar ist, enthält.

4. Wässrige Emulsion nach Anspruch 3, wobei das ethylenisch ungesättigte Monomer (s) mindestens eines ist, das aus der Gruppe ausgewählt ist, die aus einem Vinylester-Monomer und einem Styrol-Monomer besteht.

5. Wässrige Emulsion nach einem der Ansprüche 1 bis 4, wobei das ethylenisch ungesättigte Monomer (q) (Meth)acrylsäure ist.

6. Wässrige Emulsion nach einem der Ansprüche 1 bis 5, wobei das Massenverhältnis (A)/(B) des Polymers (A) zu dem Vinylalkoholpolymer (B) 98/2 bis 80/20 auf Feststoffbasis beträgt.

7. Wässrige Emulsion nach einem der Ansprüche 1 bis 6, wobei das Vinylalkoholpolymer (B) ein ethylenmodifiziertes Vinylalkoholpolymer ist.

8. Wässrige Emulsion nach einem der Ansprüche 1 bis 7, wobei das Vinylalkoholpolymer (B) einen viskositätsmittleren Polymerisationsgrad von 300 bis 4000 und einen Verseifungsgrad von 80 bis 99,9 Mol-% aufweist.

9. Verfahren zur Herstellung der wässrigen Emulsion nach einem der Ansprüche 1 bis 8, wobei ein Monomer, das das ethylenisch ungesättigte Monomer (p) und das ethylenisch ungesättigte Monomer (q) umfasst, einer Emulsionspolymerisation in Gegenwart des Vinylalkoholpolymers (B) unterzogen wird.

10. Haftmittel, umfassend die wässrige Emulsion nach einem der Ansprüche 1 bis 8.

## Revendications

1. Émulsion aqueuse comprenant un polymère contenant une unité de monomère à insaturation éthylénique (A) en tant que dispersoïde et un polymère d'alcool vinylique (B) en tant que dispersant, dans laquelle le polymère contenant une unité de monomère à insaturation éthylénique (A) comprend :

   une unité structurelle dérivée d'un monomère à insaturation éthylénique (p) polymérisable par un radical ayant un groupe fonctionnel représenté par la formule générale suivante (P) ; et
   une unité structurelle dérivée d'un monomère à insaturation éthylénique (q) polymérisable par un radical ayant un groupe fonctionnel représenté par la formule générale suivante (Q),

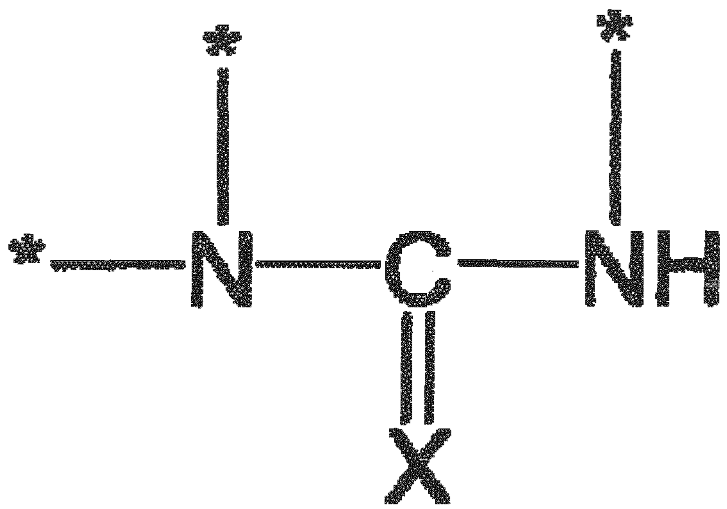

(P)

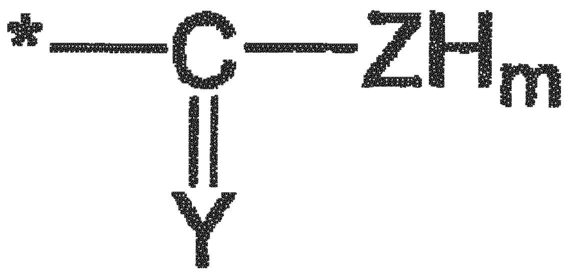

(Q)

dans lesquelles X et Y sont identiques ou différents, et chacun représente un atome d'oxygène ou un atome de soufre, Z est un atome d'oxygène ou un atome d'azote, * représente une liaison, et m est 1 ou 2,
l'unité structurelle dérivée du monomère à insaturation éthylénique (p) a une teneur de 0,2 à 10,0 % en masse par rapport au polymère (A), et l'unité structurelle dérivée du monomère à insaturation éthylénique (q) a une teneur de 0,002 à 6,0 % en masse par rapport au polymère (A),
le polymère (A) comprend un copolymère ternaire du monomère à insaturation éthylénique (p), du monomère à insaturation éthylénique (q) et d'un monomère à insaturation éthylénique (r), et le monomère à insaturation éthylénique (r) est copolymérisable avec le monomère à insaturation éthylénique (p) et le monomère à insaturation éthylénique (q),
le monomère à insaturation éthylénique (r) est au moins un sélectionné parmi le groupe constitué d'un monomère d'ester vinylique et d'un monomère de styrène, le monomère à insaturation éthylénique (p) est la N-(2-méthacryloyloxyéthyl)éthylène-urée ou la N-(2-méthacrylamidoéthyl)éthylèneurée, et
le monomère à insaturation éthylénique (q) est au moins un sélectionné parmi le groupe constitué de l'acide (méth)acrylique et de l'acrylamide.

2. Émulsion aqueuse selon la revendication 1, dans laquelle le monomère à insaturation éthylénique (p) et le monomère à insaturation éthylénique (q) ont un rapport de masse (p)/(q) de 99/1 à 45/55.

3. Émulsion aqueuse selon la revendication 1 ou 2, comprenant en outre un copolymère (C) du monomère à insaturation éthylénique (q) et d'un monomère à insaturation éthylénique (s) copolymérisable avec le monomère à insaturation éthylénique (q).

4. Émulsion aqueuse selon la revendication 3, dans laquelle le monomère à insaturation éthylénique (s) est au moins un sélectionné parmi le groupe constitué d'un monomère d'ester vinylique et d'un monomère de styrène.

5. Émulsion aqueuse selon l'une quelconque des revendications 1 à 4, dans laquelle le monomère à insaturation éthylénique (q) est l'acide (méth)acrylique.

6. Émulsion aqueuse selon l'une quelconque des revendications 1 à 5, dans laquelle le rapport de masse (A)/(B) du polymère (A) sur le polymère d'alcool vinylique (B) est de 98/2 à 80/20 sur une base des solides.

7. Émulsion aqueuse selon l'une quelconque des revendications 1 à 6, dans laquelle le polymère d'alcool vinylique (B) est un polymère d'alcool vinylique modifié par un éthylène.

8. Émulsion aqueuse selon l'une quelconque des revendications 1 à 7, dans laquelle le polymère d'alcool vinylique (B) a un degré de polymérisation moyen en viscosité de 300 à 4000, et un degré de saponification de 80 à 99,9 % en mole.

9. Procédé de production de l'émulsion aqueuse selon l'une quelconque des revendications 1 à 8, dans lequel un monomère comprenant le monomère à insaturation éthylénique (p) et le monomère à insaturation éthylénique (q) est soumis à une polymérisation en émulsion en présence du polymère d'alcool vinylique (B).

10. Adhésif comprenant l'émulsion aqueuse selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8060116 A
- JP 10121017 A
- JP 11106727 A
- JP 2001123138 A
- JP 9255894 A
- JP 2004263000 A
- JP 2009506186 T
- JP 2003523476 T
- US 2016186000 A
- US 20030065089 A
- JP 2000204106 A
- JP 2002012843 A